# EUROPÄISCHE PATENTSCHRIFT

(11) **EP 2 213 465 B1**
(45) Veröffentlichungstag und Bekanntmachung des Hinweises auf die Patenterteilung: **12.11.2014**
(21) Anmeldenummer: 09014603.6
(22) Anmeldetag: 24.11.2009
(51) Int. Cl.: B41M 5/00, B41M 7/00

(54) **Verfahren und Vorrichtung zum Beschichten zumindest eines Teiles eines Substrates**
Method and device for coating at least one part of a substrate
Procédé et dispositif de revêtement d'au moins une partie d'un substrat

(30) Priorität: 25.11.2008 AT 18452008
(43) Veröffentlichungstag der Anmeldung: 04.08.2010
(73) Patentinhaber: Durst Phototechnik Digital Technology GmbH, 9900 Lienz (AT)
(72) Erfinder: Weingartner, Peter, 9991 Dölsach (AT)
(74) Vertreter: Ofner, Clemens

(56) Entgegenhaltungen:
- EP-A2- 1 052 114
- WO-A1-2005/018941
- WO-A2-2006/084614
- DE-A1-102007 008 443

## Beschreibung

Die Erfindung bezieht sich auf ein Verfahren zum mehrfarbigen Bedrucken eines glasigen und/oder keramischen Substrates nach dem Oberbegriff des Anspruchs 1.

Eine langjährig angewandte Methode zum Bedrucken von Glas- und/oder Keramikprodukten ist das Siebdruckverfahren. Bei diesem Verfahren wird die Druckfarbe mit einer Gummirakel, einem wischerähnlichen Werkzeug, durch ein engmaschiges Textilgewebe hindurch auf das zu bedruckende Material gedruckt. Diejenigen Stellen des Textilgewebes, wo entsprechend dem Bildmotiv keine Farbe gedruckt werden soll, werden durch eine Schablone farbundurchlässig gemacht. Die Herstellung der Schablonen erfolgt beispielsweise mit Hilfe fotochemischer Behandlung: Das Textilgewebe wird mit einer fotosensitiven Emulsion bestrichen und getrocknet. Anschließend wird das Textilgewebe mit UV-Licht durch ein Positiv bestrahlt, es kommt zu einer Aushärtung der fotosensitiven Emulsion entsprechend dem Motiv. Die unbelichtete Emulsion wird durch Auswaschen entfernt, die Schablone ist nun druckbereit. Für den Druck werden keramische Farbpasten verwendet. Diese werden hergestellt, indem eine oder mehrere farbgebende Komponenten zusammen mit Flussmittel und gegebenenfalls Zusatzstoffen (Füllstoffe, Dispergiermittel) in einem Suspendiermittel, beispielsweise Siebdrucköl, angerührt wird. Die Viskosität des Siebdrucköls liegt im Bereich von 3 x 10³ mPas bis 10 x 10³ mPas. Die farbgebende Komponente besteht aus anorganischen Pigmenten, diese weisen die notwendige Stabilität für den Einbrennprozess auf. Das Flussmittel besteht im wesentlichen aus Glasfritte, diese wird durch das Erschmelzen und anschließende Abschrecken einer Glasmasse hergestellt. Glasfritte ist üblicherweise ein Zwischenprodukt bei der Herstellung von Glasschmelzen. Das so entstandene krümelig-poröse Material wird gemahlen, wobei 50 Vol.% der Partikel größer als 10 µm sind. Glasfritte wird auch als Rohstoff für die Herstellung von Emails verwendet. Die Füllstoffe können zur Verbesserung der physikalischen und chemischen Eigenschaften der keramischen Farbe dienen. Siebdruckpasten zum Bedrucken von Glas bestehen zu ca. 80% aus anorganischen Materialien (Pigmente, Flussmittel) und zu ca. 20% aus organischen Materialien (Suspendiermittel, Verdünnungsmittel, Dispergiermittel). Die anorganischen Materialien bestehen wiederum aus ca. 80% Flussmittel und etwa 20% Pigmenten. Die Viskosität einer Siebdruckpaste liegt im Bereich von 104 mPas. Nach dem Aufbringen der Farbpaste auf das zu dekorierende Glas- oder Keramikprodukt erfolgt der Einbrennprozess: Hierbei erweicht die Glasfritte und bildet einen Glasfluss auf der Oberfläche des zu bedruckenden Produktes. In diesen Glasfluss werden die Zusatzstoffe (Pigmente) eingebettet und auf der Produktoberfläche fixiert. Dieser Prozess findet im Falle von Glas als zu bedruckender Werkstoff unterhalb der Verformungstemperatur bei ca. 630°C statt.

Obwohl mit dem Siebdruck gute Druckergebnisse erzielbar sind, bietet er auch gewisse Nachteile. Die vor dem Drucken stets erforderliche Herstellung der Schablone erfordert einen gewissen Zeitaufwand, das Verfahren ist, verglichen mit dem digitalen industriellen Tintenstrahldruck, welcher aufgrund der Flexibilität des Verfahrens immer häufiger zum Einsatz kommt, langsam. Allerdings gibt es Einschränkungen, welche der Verwendung von Tintenstrahldruckern bei glasigen- und/oder keramischen Produkten, entgegenstehen: Während Siebdruckpasten eine Viskosität im Bereich von 104 mPas aufweisen, muss die Viskosität einer Inkjet-Tinte unter 15 mPas liegen, und es müssen 90 Vol.% der Partikel kleiner als 1 µm sein. Nur so kann eine gute Druckauflösung sichergestellt werden. Aufgrund der unterschiedlichen Dichten und Oberflächeneigenschaften der beiden anorganischen Anteile (Flussmittel und Pigment) ist es sehr schwierig, diese beiden Komponenten in einem niedrigviskosen Medium stabil zu halten: Es zeigt sich eine deutliche Neigung zu Sedimentation und zu Agglomeration. Diese unerwünschten Vorgänge können durch Zugabe von verschiedenen Additiven nur zum Teil verhindert werden.

Ein diese Mängel adressierendes Verfahren ist in der Patentschrift DE 199 21 925 A1 beschrieben. Dieses Verfahren zur Dekoration fester, insbesondere dekorbrandfähiger Materialien umfasst ein Aufbringen einer Dekorschicht auf der Basis einer ein Pigment und ein thermoplastisches Medium enthaltenden (thermoplastischen) Farbpaste auf eine Oberfläche des zu dekorierenden Materials mittels Direkt- oder Indirektdruck. Die Farbpaste enthält mindestens 30 Gew.-% anorganische Farbstoffe aus der Reihe der Pigmente, Glasfritte und anderen glasbildenden Komponenten und wird mittels Inkjet-Technologie verdruckt, wobei die Farbpaste mittels eines beheizbaren Inkjet-Schreibkopfs, dessen Temperatur oberhalb des Schmelzpunktes der Farbpaste gehalten wird, auf die Oberfläche des zu dekorierenden Materials oder ein Transfermaterial aufgetragen wird. Nach der Erfindung zeigen geschmolzene thermoplastische Farbpasten, wie sie zur Behälterglasdekoration verwendet werden, und demgemäß einen sehr hohen Gehalt an anorganischen Feststoffen enthalten, überraschenderweise nahezu kein Absetzen. Nach Abschaltung der Beheizung im Inkjet-Schreibkopf und/oder im Versorgungselement der Inkjet-Druckvorrichtung erstarrt die thermoplastische Farbpaste sofort, so dass es auch bei langer Standzeit zu keiner Sedimentation kommt. Als Nachteil zu werten ist, dass sämtliche Behälter und Leitungen mitsamt dem Inkjet-Schreibkopf zu beheizen sind, was einen erhöhten Energieaufwand erfordert.

Der vorliegenden Erfindung liegt die Aufgabe zugrunde, ein Verfahren und eine Vorrichtung zum Beschichten eines glasigen und/oder keramischen Substrates weiterzuentwickeln, welches zuverlässig und mit wenig Energieaufwand ein qualitativ hochwertiges digitales Aufbringen mit zum Brennen bzw. Glasieren geeigneten Fluiden ermöglicht.

Diese Aufgabe wird bei einem Verfahren zum mehrfarbigen Bedrucken eines glasigen und/oder keramischen Substrates bei dem einer durch eine Steuervorrichtung gesteuerten Applikationsvorrichtung Abgabevorrichtungen und diesen Aufnahmebehälter zur Aufnahme eines Partikelfluides und eines Pigmentfluides zugeordnet sind, dadurch gelöst, dass das Partikelfluid und das Pigmentfluid in vorher koordinierbarer zeitlicher und räumlicher Abstimmung auf das zu beschichtende Substrat aufgebracht werden und zur Glasur gebrannt werden, wobei die Pigmente mit den Partikeln vor dem Brennen auf dem Substrat gemäß Anspruch 1 gemischt werden.

Mit der Erfindung gelingt es nunmehr das Aufbringen von Partikelfluiden und Pigmentfluiden wesentlich zu vereinfachen und rascher und exakter durchzuführen, wodurch das Fixieren derartiger Fluide durch Brennen, Sintern auf glasigen und keramischen Produkten erheblich verbessert werden kann. Zusätzlich wird eine Sedimentation bzw. Agglomeration der Bestandteile der Fluide während der Vorbereitung und dem Aufbringen vermieden, in dem die Fluide mit den unterschiedlichen anorganischen Partikeln bzw. Pigmenten getrennt auf das zu beschichtende Substrat aufgebracht werden. Dadurch eröffnet sich die Möglichkeit, die unterschiedlichen anorganischen Partikel bzw. Pigmente in verschiedenen Fluiden zu stabilisieren da das Mischen von Partikel bzw. Flussmittel und Pigmenten erst am zu beschichtenden Substrat erfolgt.

Vorteilhaft ist eine weitere Maßnahme bei der das Partikelfluid und das Pigmentfluid gleichzeitig an unterschiedlichen Positionen des zu beschichtenden Teils der Oberfläche des Substrates aufgebracht werden, da ein Positionieren durch Anhaften durch einen Zwischentrocknungsvorgang oder ein Abtrocknen und damit ein exaktes Positionieren der Tropfen der Fluide ermöglicht werden kann.

Eine äußerst gute Vermischung und Einfärbung der Partikel und Pigmente wird durch ein Vorgehen erzielt bei dem das Partikelfluid und wenigstens ein Pigmentfluid in vorher bestimmbarer zeitlicher Aufeinanderfolge auf der gleichen Position des zu bedruckenden Teils der Oberfläche des Substrates aufgebracht werden.

Bei einer weiteren Verfahrensvariante der Erfindung kann von Vorteil vorgesehen sein, dass Fluidtropfen des Partikelfluids und Fluidtropfen mindestens eines Pigmentfluids übereinander aufgebracht werden. Damit kann eine Durchmischung der Pigmente mit dem Flussmittel erzielt werden.

Die Herstellung von mehrfärbigen Motiven kann dann wesentlich verbessert werden, wenn die Fluidtropfen von mehreren Pigmentfluiden zumindest teilweise überlappend übereinander aufgebracht werden

Von Vorteil ist aber auch eine Verfahrensvariante bei der die Fluidtropfen des Partikelfluides auf einen oder mehrere Fluidtropfen zumindest eines Pigmentfluides zumindest teilweise überlappend aufgebracht werden, da dadurch die in dem Pigmentfluid enthaltene Feuchtigkeit bzw. Flüssigkeit zum Fixieren der Partikel des Partikelfluids herangezogen werden kann.

Bei einem vorteilhaften weiteren Verfahrensablauf der Erfindung kann vorgesehen sein, dass das übereinander Aufbringen der Pigmentfluide und der Partikelfluide in Nass-in-nass-Technik erfolgt. Dadurch kann ebenfalls eine optimale Durchmischung erfolgen, was in weiterer Folge ein effektives Einschließen der Pigmente durch die Glasur zur Folge hat.

Eine weitere vorteilhafte Maßnahme der Erfindung kann vorsehen, dass beim Aufbringen eines mehrfarbigen Motivs jeweils zuerst das Partikelfluid und erst danach das Pigmentfluid aufgebracht wird. So kann ein exakter Farbpunkt gesetzt werden.

Nach einer weiteren vorteilhaften Weiterbildung des Verfahrens werden zum mehrfarbigen Beschichten des Objekts mit einem Motiv zuerst die Fluidtropfen zumindest eines Pigmentfluides und darauf folgend die Fluidtropfen des Partikelfluids aufgebracht, wodurch ein auf das Objekt aufgebrachtes Motiv durch die darüber aufgebrachte Schutzschicht aus Partikelfluid die auf das Objekt aufgesintert oder aufgeschmolzen werden kann, geschützt werden kann.

Ein präzises Druckbild kann erzielt werden, indem durch gleichzeitig oder aufeinander folgendes nebeneinander Platzieren mehrerer Farbpunkte aus Pigmentfluid mehrerer Grundfarben ein bunter Bildpunkt des Motives auf das Partikelfluid oder auf der Oberfläche aufgebaut wird.

Nach einer Variante der erfindungsgemäßen Maßnahmen ist es auch möglich, dass die Partikel des Partikelfluides mit einem durch ein Gas gebildeten Fluid auf die Fluidtropfen des Pigmentfluides aufgebracht werden, da damit die Partikel exakter auf der Oberfläche des Objekts positioniert werden können.

Weiters ist es nach einer Weiterbildung des Verfahrens auch möglich, dass Partikel des Partikelfluides einem durch eine Flüssigkeit gebildeten Fluid zugesetzt werden und dass das spezifische Gewicht oder die spezifische Dichte des Fluides und der Partikel annähern gleich ist, wodurch eine ungestörte Verarbeitung des Partikelfluids ermöglicht wird, da eine Sedimentation und Agglomeration dadurch verhindert wird, da sich die Partikel die gleichmäßig in der Flüssigkeit verteilt sind, ihre Position in der Flüssigkeit relativ zueinander beibehalten oder nur geringfügig durch ein Aufsteigen oder Absinken verändern. Dadurch wird das Verarbeiten mit Abgabevorrichtungen mit feinen Düsen und damit ein exaktes Positionieren der Fluidtropfen bei hoher Verfügbarkeit der Anlagen erzielt.

Vorteilhaft ist es dabei, wenn die Differenz zwischen dem spezifischen Gewicht und der spezifischen Dichte zwischen dem Fluid und dem Partikel des Partikelfluides in einem Bereich von +/- 20 % bevorzugt +/- 5 bis 10 % liegt, da dadurch eine äußerst gute Verarbeitbarkeit des Partikelfluides erzielt werden kann.

Vorteilhaft ist nach einer weiteren Maßnahme der Erfindung wenn die Viskosität und das spezifische Gewicht des Fluides im Verhältnis zum spezifischen Gewicht der Partikel derart aufeinander abgestimmt werden, dass die Relativgeschwindigkeit zwischen dem Partikeln und dem Fluid annähernd Null ist.

Gemäß einer weiteren Verfahrensvariante wir vorgesehen, dass die Viskosität und das spezifische Gewicht des Fluides im Verhältnis zum spezifischen Gewicht der Partikel derart aufeinander abgestimmt werden, dass die Sinkgeschwindigkeit der Partikel in dem Fluid des Partikelfluids zwischen 0,1 und 20 % bevorzugt 0,1 bis 10 % der Erdbeschleunigung beträgt, wodurch es z.B. möglich ist auch bei geringeren Bewegungen der Fluide eine Sedimentation oder Absetzen der Partikel im Fluid zu vermeiden.

In diesem Zusammenhang kann es auch von Vorteil sein, wenn die Viskosität und das spezifische Gewicht des Fluides im Verhältnis zum spezifischen Gewicht der Partikel derart aufeinander abgestimmt werden, dass die Auftriebsgeschwindigkeit der Partikel in dem Fluid des Partikelfluids zwischen 0,1 und 10 % der Erdbeschleunigung beträgt, da dadurch auch ein Entmischen durch zu rasches Aufsteigen der Partikel in dem Fluid verhindert werden kann.

Für optimale Flusseigenschaften und eine die Präzision fördernde Tropfengröße kann vorgesehen sein, dass das verwendete Pigmentfluid eine Viskosität von weniger als 15mPas aufweisen.

Nach einer Weiterbildung des Verfahrens kann das Partikelfluid für bessere Fließeigenschaften, bei der Verwendung in im Betrieb einer Applikationsvorrichtung, eine Trägerflüssigkeit in Form eines Fluides besitzen, welches Flussmittel in Form von Partikeln beinhaltet sowie darüber hinaus noch zusätzlich ein Dispergierhilfsmittel und eine Verdünnungsflüssigkeit enthalten um die Zähigkeit und/oder die Viskosität des Partikelfluides zu verbessern.

Vorteilhafte weitere Maßnahmen der Erfindung sehen vor, dass die Partikel des Partikelfluids aus Glas oder Keramik bzw. den Grundstoff zur Herstellung von Glas oder Keramik gebildet werden.

Hierbei ist es vorteilhaft, wenn die Partikel des Partikelfluids aus Kunststoffen, metallischen oder nichtmetallischen Materialien gebildet werden. Vorteilhaft ist es bei Verwendung derartiger Partikel, dass die Partikel durch einfache Erwärmung oder Energiezufuhr über Laser, Elektronenstrahl, Licht- oder Heißluft aufgeschmolzen, plastifiziert und damit mit dem Substrat dauerhaft verbunden werden können, ist es aber auch ebenso möglich, diese Partikel auf das Substrat aufzuschmelzen.

Vorteilhaft ist es aber auch, wenn die Partikel des Partikelfluids aus Glasfritte hergestellt werden, da dieser Werkstoff sich besonders für das Beschichten von Glas- und/oder Keramikprodukten bzw. Vorprodukten von Keramikprodukten nämlich Grünlingen eignet, da damit in einfacher Weise durch Brennen eine wiederstandsfeste Glasur hergestellt werden kann.

Damit optimale Flusseigenschaften des Flussmittels erzielt werden, können 50 Gew. % der Glasfrittepartikel einen Durchmesser kleiner als 5 µm bevorzugt kleiner als 2 µm aufweisen. Auf diese Weise kann sichergestellt werden, dass eine vollständige Umhüllung der Pigmente erzielt wird und somit die Oberfläche des gedruckten und gebrannten Dekors eine hohe Qualität aufweist.

Für die Durchführung des vorliegenden Verfahrens und das Aufbringen der Beschichtung ist es vorteilhaft, wenn die Fluidtropfen der Abgabevorrichtung für das Partikelfluid mit einem Volumen zwischen 20 und 70 bevorzugt 50 Picoliter ausgestoßen werden.

Für das Erzielen einer hohen Farbqualität kann das Pigmentfluid anorganische Farbpigmente aufweisen. Diese sind im Gegensatz zu den meisten organischen Pigmenten auch bei den hohen Brenntemperaturen stabil und zudem auch gegen Alterung resistenter.

Nach der Erfindung kann vorgesehen sein, dass 90 Gew. % der Farbpigmentpartikel einen Durchmesser von 0,5 bis 4 µm bevorzugt kleiner als 1 µm aufweisen. Dadurch lassen sich gute Fließfähigkeit und hohe Farbstärke kombinieren.

Die vorliegende Aufgabe der Erfindung kann aber auch eigenständig durch eine Vorrichtung zum Bedrucken einer Oberfläche eines festen, vorzugsweise glasigen und/oder keramischen Substrates umfasst eine Applikationsvorrichtung mit einer Steuereinrichtung, wenigstens einer Abgabevorrichtung mit mehreren der Abgabevorrichtung zugeordneten Aufnahmebehältern für ein Pigmentfluid und einem Partikelfluid, sowie einer Positioniervorrichtung für die Positionierung des zu bedruckenden Substrats, gelöst werden, wenn die wenigstens eine Applikationsvorrichtung mit jeweils separaten Abgabevorrichtungen und Aufnahmebehältern für ein Partikel fluid und ein Pigmentfluid versehen ist.

Der wesentliche Vorteil dieser Vorrichtung besteht darin, dass das Partikelfluid und das Pigmentfluid separat transportiert und appliziert werden. Die Fluide können daher besser auf die unterschiedlichen physikalischen Eigenschaften dieser Stoffe abgestimmt werden und daher kann gegenüber der Verwendung eines einzigen Gemisches die Gefahr der Sedimentation bzw. Agglomeration, während der Verarbeitung deutlich verringert werden.

Eine konstruktive Ausführung der Erfindung kann vorsehen, dass die Abgabevorrichtungen für das Partikelfluid und für das Pigmentfluid hintereinander in Zufuhrrichtung des zu bedruckenden Substrats angeordnet sind. Durch diese Anordnung kann erreicht werden, dass die derart erzielbaren Applikationsgeschwindigkeiten nicht unter der eines Inkjet-Druckers mit einfacher Abgabevorrichtung liegt.

Weitere vorteilhafte Ausgestaltungen der Vorrichtung sind den weiteren Ansprüchen und die zugehörigen Vorteile der Beschreibung zu entnehmen.

Die Erfindung soll anhand der nachfolgenden Zeichnungen näher erläutert werden: Es zeigt:
- Fig. 1: eine Prinzipdarstellung zum mehrfarbigen Beschichten eines glasigen oder kera- mischen Substrates mit einer Applikationsvorrichtung für Fluide;
- Fig. 2: eine Prinzipdarstellung des erfindungsgemäßen Verfahrens zum mehrfarbigen Beschichten eines glasigen oder keramischen Substrates;
- Fig. 3: eine schematische Darstellung einer Applikationsvorrichtung zur Durchführung des erfindungsgemäßen Verfahrens;
- Fig. 4: eine andere Ausführungsform einer Applikationsvorrichtung zur Durchführung des erfindungsgemäßen Verfahrens mit mehreren Abgabevorrichtungen für Flu- idtropfen in Seitenansicht und in stark vereinfachter schematischer Darstellung;
- Fig. 5: eine schematische Darstellung der gemäß dem erfindungsgemäßen Verfahren auf- gebrachten Fluidtropfen in Draufsicht;
- Fig. 6: eine mit dem erfindungsgemäßen Verfahren herstellbare Anordnung der verschie- denen Fluidtropfen in mehreren Lagen übereinander in Seitenansicht und stark vereinfachter, schematischer Darstellung;
- Fig. 7: eine mit dem erfindungsgemäßen Verfahren herstellbare Anordnung der verschie- denen Fluidtropfen in mehreren Lagen übereinander in Draufsicht und stark ver- einfachter, schematischer Darstellung;
- Fig. 8: eine mit dem erfindungsgemäßen Verfahren herstellbare Anordnung der verschie- denen Fluidtropfen in mehreren Lagen übereinander in schaubildlicher und stark vereinfachter, schematischer Darstellung in Stirnansicht geschnitten;

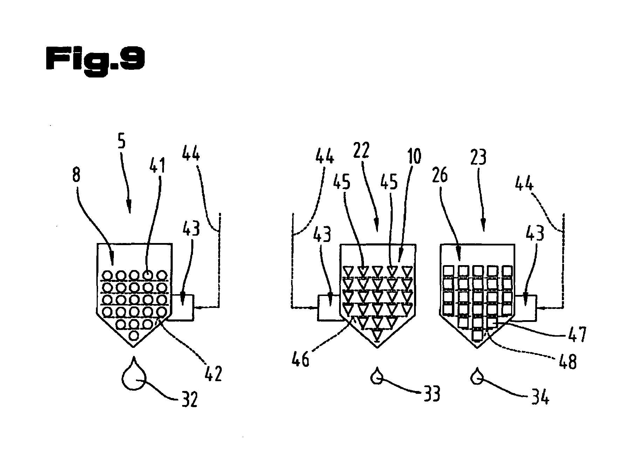

- Fig. 9: die Abgabevorrichtungen für Fluidtropfen der Applikationsvorrichtung nach Fig. 4 in stark vereinfachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Während eine Vorrichtung zur Durchführung des erfindungsgemäßen Verfahrens ein mehrfarbiges Drucken ermöglicht, sind die hier dargestellten Zeichnungen zum Zwecke der Vereinfachung der Darstellung auf eine Druckfarbe beschränkt.

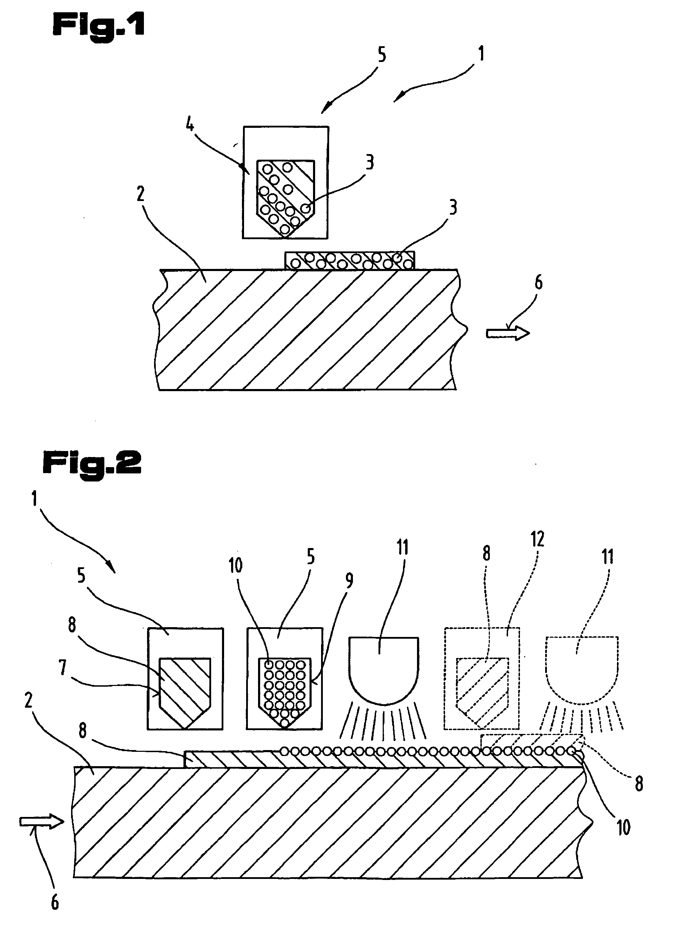

Die in der Figur 1 in ihrem Funktionsprinzip dargestellte Applikationsvorrichtung 1 zum Beschichten eines Substrates 2 durch Aufbringen eines Fluides 3 funktioniert nach dem bisherigen Stand der Technik. Es ist lediglich eine Düse 4 einer Abgabevorrichtung 5 für das Fluid 3 vorhanden. Die Düse 4 bzw. die Abgabevorrichtung 5 und das zu beschichtende Substrat 2 weisen zumindest in einer Vorschubrichtung Pfeil 6 zueinander eine Relativbewegung auf. Zudem ist es möglich, dass die Abgabevorrichtung 5 mit den Düsen 4 auch quer zur Fortbewegungsrichtung - Pfeil 6 - bewegt wird und zwar dann, wenn es sich um so genannte scannende Applikationsvorrichtung 1 handelt, wobei dann der Vorschub des zu beschichtenden Substrates 2 intermittierend, das heißt jeweils nach der Bewegung der Abgabevorrichtung 5 über die gesamte quer zur Vorschubrichtung - Pfeil 6 - verlaufende Breite.des Substrats 2 erfolgt ist.

Die nachfolgenden Ausführungen zu den erfindungsgemäßen Verfahren und Vorrichtungen gelten sowohl für so genannte Single - Pass Anwendungen der Abgabevorrichtung 5, bei welche sich die Abgabevorrichtung 5 bzw. die unter Umständen aus einer oder mehreren Gruppen bestehenden Abgabevornchtungen 5 für alle benötigten Farben und die aufzutragenden Partikel über die gesamte maximal mögliche Breite des zu beschichtenden Substrates 2 erstrecken, also auch für so genannte scannende Applikationsvorrichtung 1, bei welcher sich die Abgabevorrichtungen für die verschiedenen Fluide nur über einem Teilbereich der Breite des Substrates 2 erstrecken und das Aufbringen der Tinte streifenweise, vorzugsweise bei stillstehendem Substrat 2, erfolgt.

Des Weiteren ist es aber auch möglich, eine Abgabevorrichtung 5 einzusetzen, bei der die Tropfen des Fluides 3 nach dem Austritt aus der Abgabevorrichtung 5 durch ein elektromagnetisches Feld so abgelenkt werden, dass sie auf der richtigen Stelle des zu bedruckenden Substrats 2 auftreffen.

Bei dem Substrat 2 auf das das Motiv 11 wie z.B. ein Linsenrasterbild, ein räumliches Motiv, eine Zierleiste, eine Holzmaserung aufzubringen ist, kann es sich um unterschiedliche Materialien, beispielsweise folienartige Materialien aus Papier, Kunststoff, Metall, Textil, Holz und dergleichen oder um Vliese, Netze und dergleichen oder aber auch um plattenförmiges Material, wie z.B. MDF-Platten, Melaminplatten, einem Glasbauteil, Sperrholz, Furnier, Kunststoffplatte, Karton und bandförmiges Material aus den vorgenannten Materialien handeln. Insbesondere ist es möglich, plattenförmiges Material oder Bauteile oder Folien aus Holz, zum Beispiel auch mit zu diesem Holz unterschiedlichen Holzstruktur, Keramik, wie keramische Bauteile als gebrannte Ware oder als Grünlinge, Natursteine oder andere Naturmaterialien wie Matten, Netze, Vliese oder Leder und sonstige Baumaterialien wie beispielsweise Gipskartonplatten, Gipsbauteile oder dergleichen zu bedrucken oder eine dreidimensionale Struktur 2 aufzubringen.

Die in der Figur 2 dargestellte, erfindungsgemäße Applikationsvorrichtung 1 zur Durchführung des erfindungsgemäßen Verfahrens verfügt über eine Düse 7 für das Aufbringen eines Partikelfluides 8 und über eine Düse 9 für das Aufbringen eines Pigmentfluides 10.

Die Düsen 7, 9 und das zu bedruckende Substrat 2 weisen eine Relativbewegung zueinander in Richtung des Pfeiles 6 auf, und zwar in der Form, dass zuerst das Partikelfluid 8 und erst danach das Pigmentfluid 10 aufgebracht wird. Bei dieser Anordnung der Düsen 7 und 9 ist es möglich, das Partikelfluid 8 und das Pigmentfluid 10 gleichzeitig aus Düsen 7, 9 von unmittelbar einander benachbarten Abgabevorrichtungen 5 aufzubringen. Dadurch ist es möglich, die beiden Fluide 8, 10 in Nass-In-Nass-Technik aufzubringen.

In vorteilhafter Weise ist es dabei möglich, dass die Pigmente des Pigmentfluids 10 in das noch nasse Partikelfluid 8 zumindest partiell einsinken können und vorzugsweise dadurch bei der nachfolgenden Aushärtung - die beispielsweise durch Energiezufuhr über eine Trockenvorrichtung 11 beispielsweise eine UV-Licht abgebende Lampe oder eine Infrarot- oder andere Wärmestrahlung abgebenden Vorrichtung gebildet sein kann - getrocknet und die Pigmente des Pigmentfluids 10 in der Flusstinte 8 fixiert werden können. Es ist aber weiters alternativ auch möglich, dadurch eine optimale Mischung zwischen dem Partikelfluid 8 und dem Pigmentfluid 10 zu erreichen, zuerst eine oder mehrere Pigmenttinten 10 aufzubringen und auf und/oder zwischen diesen zumindest in einzelnen Teilbereichen ein Partikelfluid 8 aufzubringen, was in weiterer Folge ein effektives Einschließen der Pigmente durch die Partikel bzw. das Flussmittel zur Folge hat, wodurch sich in weiterer Folge beim Brennen eine makellose Glasur ergibt.

Des Weiteren ist es aber auch möglich, das Partikelfluid 8 und das Pigmentfluid 10 durch Abgabevorrichtungen 5, 12 aufzubringen, die in Richtung der Relativbewegung gemäß Pfeil 6 eine größere Distanz aufweisen. So ist es beispielsweise möglich, dass die Abgabevorrichtungen 5, 12 für die Partikelfluide 8 und Pigmentfluide 10 in eigenen hintereinander angeordneten Singelpass-Applikationsvorrichtungen 5, 12 angeordnet sind oder ist es auch möglich, das gesonderte scannende Applikationsvorrichtung 1 angeordnet sind und sich die Abgabevorrichtungen 5, 12 für das Pigmentfluid 10 auf einer anderen scannenden Applikationsvorrichtung 1 befinden wie die Abgabevorrichtung 1 für das Aufbringen des Partikelfluides 8.

Vorteilhaft ist es bei der Ausbildung von Applikationsvornchtungen 1 die aus mehreren Gruppen 13 von Abgabevorrichtungen 5, 12 bestehen, wenn diese austauschbar, gegebenenfalls mit Schnellkupplungsvorrichtungen für die Fluidzufuhr und die Energieversorgungs- und Steuerleitungen ausgestattet sind, sodass bei Störungen der einzelnen Abgabevorrichtungen 5, 12 diese rasch gegen neue Abgabevorrichtungen 5, 12 erstetzt werden können. Auch die Anordnung der einzelnen Abgabevorrichtungen 5, 12 in jeweils einander benachbarten Reihen die in Längsrichtung der Reihen gegeneinander versetzt sind, ist bei Singelpass-Applikationsvorrichtungen 1 oder auch bei scannenden von Vorteil.

Je nach der gewünschten Auflösung ist es auch möglich, dass die Abgabevorrichtungen 5 schräg zur Relativbewegungsrichtung - Pfeil 6 - angeordnet sind wie dies aus dem Stand der Technik beispielsweise der WO 2006/084614 A1 und hinsichtlich des Auftragen der verschiedenen Tropfen der Fluide aus der AT 411 975 A der selben Anmelderin zu entnehmen ist.

Durch die Anordnung der Abgabevorrichtungen 5, 12 in einer vorbestimmbaren Distanz hintereinander ist es auch möglich, den Trocknungszustand der Partikelfluides 8 so zu steuern, dass z.B. die Pigmente des Pigmentfluids 10 an der Oberfläche nur mehr leicht anhaften, jedoch nicht mehr in die Schicht aus Partikelfluid 8 einsinken können.

In diesem Zusammenhang kann es sich als vorteilhaft erweisen, nachfolgend zu den Abgabevorrichtungen 5 für das Partikelfluid 8 und des Pigmentenfluids 10 einen weiteren - in den Zeichnungen strichliert angedeuteten Abgabevorrichtung 12 vorzusehen, mit dem nochmals Partikelfluid 8 aufgetragen werden kann, sodass über des Pigmentfluid 10 eine weitere Lage aus Partikelfluid8 oder Pigmentfluid 10 aufgebracht werden kann. Für den Fall des zusätzlichen Aufbringens eines weiteren Partikelfluides 8 oder Pigmentfluides 10 auf das Pigmentfluid 10 kann die Vorrichtung zur Energiezufuhr 11 auch vor oder nur dieser weiteren Abgabevorrichtung 12 nachgeordnet sein.

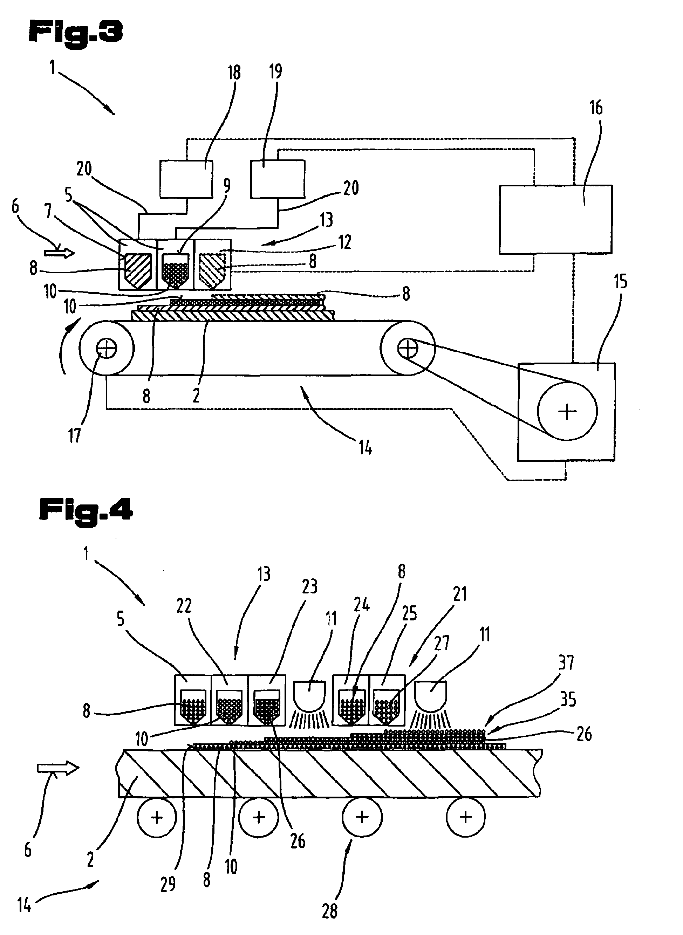

Figur 3 zeigt eine schematische Darstellung einer anderen erfindungsgemäßen Vorrichtung zur Durchführung des erfindungsgemäßen Verfahrens. Die Applikationsvorrichtung 1 funktioniert bevorzugt nach dem in Industrieanwendungen üblichen Continuous Ink Jet - Prinzip, also mit kontinuierlichem Tintenstrahl. Der Applikationsvorrichtung 1 ist eine Positioniervorrichtung 14 zugeordnet, mittels welcher das zu bedruckende Substrat 2 einer Gruppe 13 der Abgabevorrichtung 5, 12 der Applikationsvorrichtung 1 zugeführt wird, die aus mehreren Abgabevorrichtungen 5 beziehungsweise 12 oder auch mehreren Gruppen 13 solcher Abgabevorrichtungen 5 beziehungsweise 12 bestehen kann.

Im vorliegenden Fall ist die Gruppe 13 lediglich schematisch dargestellt und erstreckt sich über die gesamte Breite des zu bedruckenden Substrates 2 und ist daher für eine Singelpass-Beschichtung geeignet, bei der die Gruppe 13 also auch die Abgabevorrichtungen 5, 12 still stehen und das zu bedruckende Substrat 2 mit der Positioniervorrichtung 14 unterhalb der Abgabevorrichtung 5, 12 in Förderrichtung - Pfeil 6 - hindurchbewegt wird.

Diese Positioniervorrichtung 14 wird vorzugsweise durch ein Endlosförderband gebildet, das über wenigstens zwei Umlenkrollen geführt wird. Der Antrieb der Positioniervorrichtung 14 erfolgt über eine Antriebsvorrichtung 15. Als Antriebsvorrichtung 15 kann bevorzugt ein Asynchronmotor verwendet werden, dessen Regelung über einen Frequenzumrichter erfolgt, welcher wiederum mit der Steuereinrichtung 16 verbunden ist. Selbstverständlich ist es auch möglich, jegliche andere Antriebsvorrichtung beziehungsweise andere elektrische Motoren oder Antriebselemente mit sowohl analoger als auch digitaler Steuerungen zur Steuerung des Vorschubs mit der Positioniervorrichtung 14 vorzusehen. Die Bandgeschwindigkeit kann mit einem nur schematisch dargestellten Sensor 17 ermittelt werden, welcher sein Messsignal an die Steuereinrichtung 16 liefert. Bei Bedarf kann die Bandgeschwindigkeit so angepasst werden.

Bevorzugt ist am Bandeinlauf eine seitliche Führung oder eine Zentnervorrichtung angeordnet, die an die jeweilige Breite des zu bedruckenden Substrats 2 angepasst werden kann und mit der das Substrat 2 in allen gewünschten Raumrichtungen exakt ausgerichtet werden kann.

Das zu bedruckende Substrat 2 kann dabei so exakt am Endlosförderband geführt werden, dass es gegenüber der Abgabevorrichtungen 5, 12 seitlich mit hoher Genauigkeit, z. B. einer Toleranz von kleiner +/- 1mm zentriert ist.

Selbstverständlich ist es aber auch möglich, bei benötigter extrem exakter Positionierung das Substrat 2 über die gesamte Länge zumindest der Abgabevorrichtungen 5, 12 seitlich exakt zu führen oder auf der Positioniervorrichtung 14 exakt positionierte Aufnahmen für das Substrat 2 anzuordnen. Dadurch ist es möglich, die Tropfen der Fluide zumindest auf den zu bedruckenden Teil einer Oberfläche des Substrates 2 präzise zu positionieren.

Weitere Abgabevorrichtung 5, 12 für mehrere Farben, hier nicht dargestellt, können hintereinander in Zufuhrrichtung -Pfeil 6 - angeordnet sein.

Zur Herstellung eines mehrfarbigen Motives oder Bildes ist es nunmehr möglich, dass durch nebeneinander Platzieren mehrerer Fluidtropfen aus Pigmentfluid 10 mehrerer Grundfarben ein bunter Bildpunkt auf dem Partikelfluid 8 aufgebaut wird, während das zu beschichtende Substrat 2 vermittels der Positioniervorrichtung 14 weiterbewegt wird. Die Bewegungsrichtung ist durch den Pfeil 6 signalisiert.

Dies ermöglicht einen Farbauftrag in einem einzigen Durchlauf des zu beschichtenden Substrats 2, sodass sich hohe Beschichtungsgeschwindigkeiten realisieren lassen.

Die Abgabevorrichtungen 5 umfassen die Düsen 7, 9 für die Applikation der Fluidtropfen des Partikelfluides 8 und des Pigmentfluides 10 auf das zu beschichtende Substrat 2.

In Aufnahmebehältern 18, 19 werden die entsprechenden Partikelfluide 8 und Pigmentfluide 10 auf Vorrat gehalten. In diesen Aufnahmebehältern 18, 19 werden diese Fluide auf die für die Bearbeitung in den Abgabevorrichtungen 5, 12 benötigte Temperatur gebracht und gehalten und werden diese Fluide 8, 10 durch Umpumpvorgänge bzw. Rührwerke oder Ultraschallbeaufschlagung in Bewegung gehalten, sodass keine Entmischung zwischen den Fluiden 8, 10 und den in den Fluiden zugemischten Partikeln bzw. Pigmenten erfolgen kann.

Dabei ist es wie aus dem Stand der Technik möglich, diese Fluide 8, 10 über Zuführleitungen 20 im Kreislauf durch die jeweiligen Düsen 7, 9 hindurchzuführen, sodass eine gleichmäßige Verteilung der Partikel und Pigmente in den Fluiden sichergestellt werden kann. Die Steuerung der Temperatur und der Bewegung der Fluide in den Aufnahmebehältern 18, 19 sowie in den Zuführleitungen 20 bzw. den Düsen 7, 9 kann durch die Steuereinrichtung 16 beaufschlagt und/oder überwacht werden.

Ebenso werden die Füllstände der Aufnahmebehälter 18, 19 von der Steuereinrichtung überwacht.

Die Düsen 7, 9 sind mit entsprechenden Austragvorrichtungen bzw. Antrieben versehen, die das Ausstoßen von Tropfen der Fluide 8, 10 auf das zu beschichtende Substrat 2 bewirken. Durch die Austragvorrichtungen können über die Ansteuerung mit der Steuervorrichtung 16 Fluidtropfen mit unterschiedlichem Volumen an den durch eine Bilddatenauswerte- bzw. - erkennungsvorrichtung ausgewählten Positionen an den zu beschichtenden Teilen der Oberfläche des Substrates 2 abgegeben werden. Die Austragvorrichtungen können mit einem Antrieb wie einem Piezo-Antrieb, einem Valve-Jet-Antrieb, einem elektrostatischen, thermischen oder akustischen Antrieb zum Austragen der Tropfen der Fluide versehen sein.

Falls erforderlich kann das Substrat mit den aufgebrachten Pigment- bzw. Partikelfluiden 8, 10 einer nachfolgenden Trocken- oder Härtevorrichtung 11 bzw. einer Brennvorrichtung zum Aufschmelzen oder einer Sintervorrichtung zum Aufsintern zumindest der anorganischen Partikel des Pigmentfluides zugeführt werden.

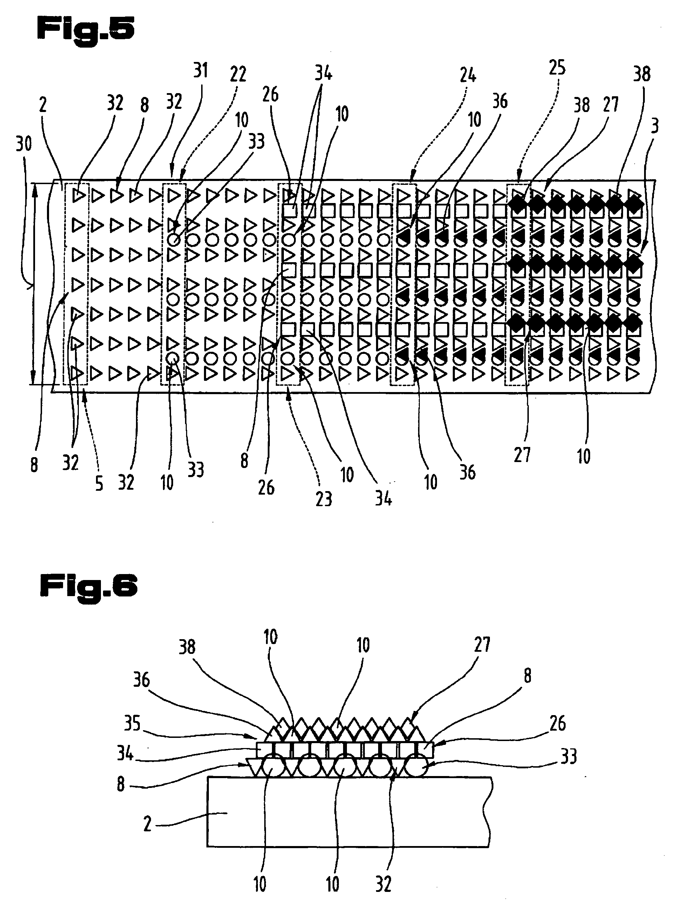

In Fig. 4 und 5 ist eine weitere Ausführungsvariante einer Applikationsvorrichtung 1 gezeigt. Diese Applikationsvorrichtung 1 umfasst Gruppe 13 und eine weitere Gruppe 21 die jeweils mit mehreren Abgabevorrichtungen 5, 22 und 23 sowie 24 und 25 ausgestattet sein können.

Die Anzahl der in Förderrichtung - Pfeil 6 - hintereinander angeordneten Abgabevorrichtungen 5, 22 bis 25 kann entsprechend den gewünschten Farben die auf das zu beschichtende Substrat 2 aufgebracht werden müssen, beziehungsweise die entsprechende Anzahl von Partikelfluiden 8, 26 beziehungsweise Pigmentfluiden 10 beziehungsweise 27 festgelegt werden.

Im vorliegenden Fall wird das Substrat 2 beispielsweise auf einer Rollenbahn 28 der Positioniervorrichtung 14 unter der bevorzugt stationär stehenden Applikationsvornchtung 1 hindurchbewegt.

Das in Förderrichtung - Pfeil 6 - zugeführte Substrat bewegt sich zuerst unter die Applikationsvorrichtung 5 eine Lage 29 des Partikelfluides 8 auf das Substrat aufgetragen wird.

Wie besser aus Fig. 5 zu ersehen ist, kann es sich hierbei um bzw. Breite 30 die der Breite des Substrates 2 entsprechen kann oder wie im dargestellten Ausführungsbeispiel auch geringer sein kann als die Breite des Substrats 2, über die mit der Abgabevorrichtung 5 beispielsweise in einer Zeile 31 Fluidtropfen 32 aus Partikelfluiden 8 aufgebracht werden.

In Förderrichtung - Pfeil 6 - nachfolgend werden dann mit der Abgabevorrichtung 22 Fluidtropfen 33 des Pigmentfluides 10 beispielsweise in den einzelnen Teilbereichen über die Druckbreite 30 des Substrates 2 aufgebracht. Danach werden weitere Fluidtropfen 34 eines weiteren Partikelfluids 26 mit der Abgabevorrichtung 23 aufgebracht, wobei beispielsweise die einzelnen Fluidtropfen 34 des Pigmentfluides 10 bzw. 27 gegeneinander versetzt angeordnet sein können, sodass jeweils zwischen den Fluidtropfen 32 des Pigmentfluides 10 ein Fluidtropfen 34 des Pigmentfluides 26 platziert werden kann.

Anschließend ist es mit der weiteren Abgabevorrichtung 24 möglich über die aufgetragenen Fluidtropfen 34 des Partikelfluides 26 einer Lage 35 von Fluidtropfen 36 des Pigmentfluides 6 aufzutragen, um beispielsweise zwischen den einzelnen Fluidtropfen bzw. den daraus am Substrat 2 gebildeten Fluidpunkten 32, 33 befindlichen Hohlräume entweder im Kreuzungspunkt zwischen vier benachbarten Fluidtropfen, 32, 33 oder entsprechenden Fluidpunkten am Substrat 2 oder zwischen den einzelnen Fluidtropfen 32, 33, 34 bzw. den aus diesen hergestellten Fluidpunkten in den einzelnen Reihen 31 oder zwischen zwei hintereinander angeordneten Reihen 31 aufzutragen.

Nur beispielsweise ist gezeigt, dass anschließend auf diese Lage 35 aus Pigmentfluid 10 mit der Abgabevorrichtung 25 eine weitere Lage 37 aus Fluidtropfen 38 eines weiteren Pigmentfluides 27 partiell oder flächendeckend auf die darunter befindliche Lage 35 bzw. 29 aufgebracht werden kann.

Entsprechend dem gewünschten Schicht oder Glasuraufbau können verschiedene Layer bzw. Lagen 29, 35, 37 von Partikelfluiden 8, 26 und/oder Pigmentfluiden 10, 27 z.B. Nass-In-Nass auf das zu beschichtende Substrat 2 in beliebiger Reihenfolge von Pigmenttinte 10, 27 und/oder Partikelfluiden 8, 26 oder umgekehrt aufgebracht werden. Selbstverständlich ist es auch möglich, wie beispielsweise angedeutet durch eine Energiezufuhrvorrichtung 11 beispielsweise mittels Energiestrahlen wie UV-Licht oder dergleichen eine Zwischentrocknung der aufgebrachten Fluide 8, 10, 26, 27 vorzunehmen, bevor die nächste Lage 29, 35, 37 aus Partikelfluid 8, 26 bzw. aus Pigmentfluid 10, 27 aufgebracht wird.

Hierzu können auch beispielsweise zwischen den einzelnen Abgabevorrichtungen 5, 22, 23 beziehungsweise 24, 25 eigene Energievorrichtungen 11 angeordnet sein.

Durch die Möglichkeit unterschiedliche anorganische Anteile z.B. von Pigmenten in verschiedenen Fluiden zur Herstellung verschiedener Farben zu stabilisieren ist es möglich, eine Vielzahl an unterschiedlichen Farbeffekten bzw. Materialkombinationen mit der Applikationsvorrichtung 1 aufzutragen, die sonst untereinander nicht mischfähig sind beziehungsweise nicht stabil gemischt werden können, sodass sie nunmehr mit Abgabevorrichtungen 5, 12, 22-25 aufgetragen werden können.

Diese Abgabevorrichtung 5, 12, 22-25 können entsprechend dem aus der Industrie bekannten und in hohen Stückzahlen eingesetzten so genannten Tintenstrahldruckköpfen entsprechen mit denen ebenfalls mit Pigmenten vermischte Fluide verteilt auf Substrate aufgebracht werden können. Vorteilhaft ist es, wenn die Durchmesser der Düsen der Abgabevorrichtungen 5, 12, 22-25 an die Dichte, wie es die dynamische und/oder kinematische Viskosität der Pigmentfluide 10, 27 bzw. Partikelfluide 8, 26 angepasst sind. Des Weiteren ist es auch möglich, zusätzlich oder bereichsweise Abgabevorrichtungen 5, 12, 22-25 mit unterschiedlichen Düsendurchmessern vorzusehen, sodass Fluidtropfen 32-34 und 36 mit unterschiedlichem Volumen oder die Partikeln oder Pigmenten unterschiedlicher Körnungsgröße aufweisen, ausgetragen werden können.

Der Vorteil der Hintereinanderanordnung verschiedener Abgabevorrichtungen 5, 22, 23, 24, 25 zum Auftragen verschiedener Flussmittel bzw. Partikel- und/oder Pigmentfluiden 8, 26; 10, 27 liegt darin, dass Partikel, z.B. Flussmittel und Pigmente erst am Substrat 2 vermischt werden beziehungsweise miteinander in Kontakt kommen.

Durch die Fülle der Möglichkeit wie die einzelnen Tropfen 32-34, 36, 38 an Partikelfluid 8, 26 und/oder Pigmentfluid 10, 27 nebeneinander teilweise überlappend, in den Zwischenräumen zwischen den einzelnen Fluidtropfen bzw. -punkten 32-34, 36, 38, beziehungsweise übereinander vollflächig einander überdeckend angeordnet sein können, ist eine Fülle an unterschiedlichen Lagen 29, 35, 37 herstellbar, die mit bisher bekannten Verfahren nicht hergestellt werden konnten.

Selbstverständlich können beim Auftragen dieser Tintenpunkte Fluidtropfen 32-34, 36, 38 alle bekannten Verfahren wie sie aus dem österreichischen Patent AT 411 957 B bekannt sind wie beispielsweise Interlacing, Interleaving, zum Auftragen der verschiedenen Partikelfluiden 8 bzw. Pigmentfluiden 10, 26, 27 verwendet werden bei welchen nur an einzelnen ausgewählten Punkten innerhalb einer Zeile 31, d. h. mit Zwischenräumen, in welchem keine Fluidtropfen abgegeben werden, Fluidtropfen aufgedruckt werden.

In Fig. 5 ist beispielsweise gezeigt, dass über eine Zeile 31 mit der Abgabevorrichtung 22 nur an bestimmten Stellen Fluidtropfen 33 aus Pigmenttinte 10 auf die darunter liegende Lage 29 aus Fluidtropfen aus Partikelfluid 8 gebildeten Fluidpunkten 32 aufgebracht wird.

Mit der nachfolgenden Abgabevorrichtung 23 kann dann eine andere Mischung und ein andere Art oder eine anders zusammengesetzte Partikelfluid 26 beispielsweise in die Zwischenräume zwischen die Fluidtropfen bzw. -punkte 33 der Zeile 31 wie beispielsweise durch die Fluidtropfen 34 schematisch angedeutet, aufgebracht werden.

Wesentlich ist hierbei, dass die einzelnen Fluidtropfen 32, 33, 34 in Abhängigkeit von der Steuereinrichtung 16 bzw. den Farb- bzw. Bild- oder Rasterdaten die durch das entsprechende Softwareprogramm vorgegeben sind, abgegeben werden.

Auf die weitere Lage 35 aus Fluidtropfen 36 des Pigmentfluids 10, die mit der Abgabevorrichtung 24 aufgebracht wird, kann eine weitere Lage 37 - Fig. 4 - aus Fluidtropfen 38 bzw. - punkten von Pigmentfluid 27 mit der Abgabevorrichtung 25 partiell oder über die gesamte Breite 30 durchgehend in mehr oder weniger dichter Nebeneinanderanordnung oder einander unmittelbar berührend bzw. zumindest teilweise überlappend angeordnet sein.

Damit ist es auch möglich an verschiedenen Stellen des Substrates 2 unterschiedliche Lagen 29, 3 5, 37 oder Layer aus Partikelfluid 8, 26 und/oder Pigmentfluiden 10, 27 aufzubringen, um unterschiedliche Effekte designmäßiger, farbmäßiger oder physikalischer Zusammensetzung zu erreichen.

Auch kann durch die entsprechende Wahl der Tröpfchengröße d. h. das Volumen der einzelnen Fluidtropfen 32-34, 36, 38 die durch die daraus entstehenden Tintenpunkte bedeckte Fläche am Substrat 2 sowie deren Schichtstärke und somit auch die Schichtstärke der einzelnen Lagen 29, 35, 37 bzw. Layer an die entsprechenden Bedürfnisse angepasst werden. Damit ist es zum Beispiel möglich Pigmente der Pigmentfluide 10, 27 voll in eine Lage aus Partikelfluid 8, 26 einzubetten oder diese nur partiell in das Partikelfluid 8, 26 einzulagern.

Auch die Vermischung und die Mischungsverhältnisse zwischen des Partikelfluids 8, 26 und den Pigmentfluid 10, 27 kann durch unterschiedliche Tropfengröße der Fluidtropfen 32-34, 36, 38 bzw. durch deren nebeneinander oder übereinander Lagerung bzw. der partiell überlappenden Anordnung der daraus gebildeten Fluidpunkte erzielt werden. Auch ist es möglich nach jeder Lage 29,35, 37 aus Pigmentfluid10, 27 jeweils eine Lage aus Partikelfluid 8, 26 partiell oder flächendeckend aufzubringen.

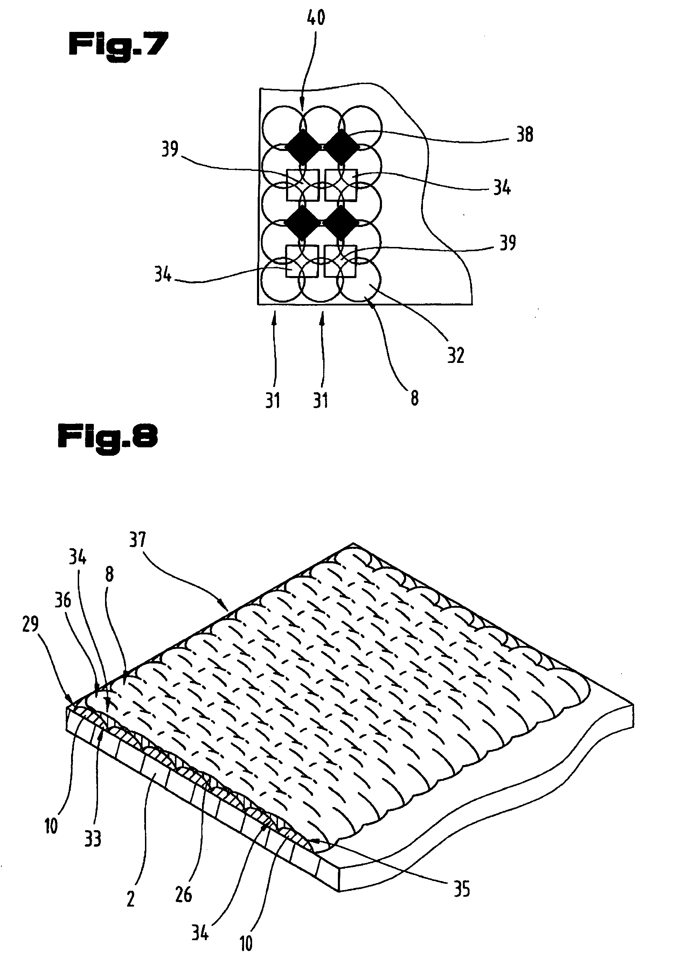

In den Fig. 6 und 7 sind schematisch weitere Möglichkeiten der Anordnung der einzelnen Fluidtropfen 32-34, 36, 38 aus Partikelfluid 8, 26 beziehungsweise Pigmentfluid 10, 27 gezeigt. So kann wie die Darstellung in Fig. 6 schematisch zeigt, selbstverständlich auch die Volumengröße d. h. also das Volumen der einzelnen Fluidtropfen 32-34, 36, 38 oder die Tropfengröße zur Bildung der Fluidpunkte über die Steuereinrichtung 16 vorbestimmt und gesteuert werden. Damit ist es auch möglich, die Größe der durch die Fluidtropfen 32, 33, 34, 36 gebildeten Fluidpunkte, 38 sowie deren Überlagerung und Überdeckung, besser zu steuern. So ist es möglich, dass auf den Überlappungsbereich der Fluidtropfen 32 aus Partikelfluid 8, 26 die Fluidtropfen 33 aus Pigmentfluid 10, 27 aufgebracht werden können.

Selbstverständlich ist es auch möglich die Fluidtropfen direkt übereinander aufzubringen, wie dies anhand der Tintentropfen 33 und 36 in Fig. 6 gezeigt ist.

Aus der Darstellung in Fig. 7 ist zu ersehen, dass die einzelnen Fluidtropfen 32 des Partikelfluids 8 in allen Richtungen einander überlappend angeordnet sind, so dass entweder kein oder nur ein minimaler Freiraum zwischen den vier Fluidpunkten in zwei einander benachbarten Reihen 31 verbleibt.

Beispielsweise kann nun eine Reihe 40 gebildet aus Fluidpunkten 34 des Partikelfluids 26 und Fluidpunkten 38 des Pigmentfluides 27 so übereinander aufgebracht werden, dass die Reihe 40 mittig zwischen den Längsmittellinien der Reihen 31 positioniert wird, wobei weiters zu ersehen ist, dass die Fluidtropfen 38 und 34 abwechselnd jeweils im Schnittpunkt von vier darunter liegenden Fluidtropfen 32 des Partikelfluids 8 positioniert werden können.

In Fig. 8 ist eine schaubildlichen Darstellung teilweise geschnitten einer weiteren und gegebenenfalls für sich eigenständige Ausführungsform der Anordnung und der Überlappung der verschiedenen Fluidtropfen 32 bis 34 schematisch dargestellt, wobei wiederum für gleiche Teile gleiche Bezugszeichen bzw. Bauteilbezeichnungen wie in den vorangegangenen Fig. 2 bis 7 verwendet werden. Um unnötige Wiederholungen zu vermeiden, wird auf die detaillierte Beschreibung in den vorangegangenen Fig. 2 bis 7 hingewiesen bzw. Bezug genommen.

In diesem Fall werden auf das Substrat 2 zuerst Fluidtropfen 33 des Pigmentfluids 10 insoweit aufgebracht, dass sie sich zumindest in Längsrichtung des Substrates 2 geringfügig überlappen.

Auf diese Lage 29 aus Fluidtropfen 33 werden dann wie im vorliegenden Fall in Längsrichtung schematisch angedeutet um die halbe Teilung versetzt, Fluidtropfen 34 aus einem Partikelfluid 26, z.B. mit einem etwa gleich großen Volumen als die Fluidtropfen 33, in die Zwischenräume zwischen den einzelnen Fluidtropfen 33 aufgetragen.

Über diese Lage 35 aus den Fluidtropfen 34 wird dann eine weitere Lage 37 aus Fluidtropfen 36 aus Pigmentfluid 10, 27 aufgetragen. Diese werden wiederum in die verbleibenden Zwischenräume zwischen den Fluidtropfen 34 aufgetragen. Selbstverständlich ist es aber auch möglich, das Volumen der Fluidtropfen 36 so zu bestimmen, dass diese nicht nur die Zwischenräume zwischen den einzelnen Fluidtropfen 34 des Partikelfluids 26 überdecken, sondern dass zusätzlich unteren Fluidtropfen 36 mit kleineren Volumen auf die äußerste Oberfläche der Fluidtropfen 34 des Partikelfluids 26 aufgetragen werden, sodass die beiden Lagen 35 und 37 zur Gänze durch die Lage aus Fluidtropfen 36 abgedeckt ist.

Selbstverständlich ist dabei jede andere beliebige Anordnung und Lage der einzelnen Fluidtropfen bzw. -punkte der verschiedenen Layer bzw. Lagen 25, 35, 37 aus Partikelfluid 8, 26 bzw. Pigmentfluid 10, 27 im Rahmen der Erfindung und wie aus dem Stand der Technik bekannt möglich.

Auch die Zusammensetzung der den Reihen 31, 40 und/oder Lagen 29, 35, 37 bzw. verschiedenen Lagen und Layern verwendeten Partikelfluide 8, 26 und dem Pigmentfluid 10, 27 kann unterschiedlich sein.

Von besonderer Bedeutung für die vorliegende Erfindung sind die Eigenschaften und gegebenenfalls die Zusammensetzung der Pigmentfluide 10 und der Partikelfluide 8 die auf das Substrat aufgebracht werden sollen.

Aus diesem Grund sind die Abgabevorrichtungen 5, 22, 23 der Applikationsvorrichtung gemäß Fig. 4 die eine Gruppe 13 bilden, in größerem Maßstab dargestellt.

Wie aus diesen Darstellungen zu ersehen ist, ist das zum Austragen aus der Abgabevorrichtung 5 vorgesehene Partikelfluid 8 aus Partikeln 41 sowie einem Fluid 42 - schematisch durch strichlierte Linien angedeutet - hergestellt.

Bei dem Fluid 42 kann es sich um ein Gas beispielsweise Luft oder um unterschiedlichste Flüssigkeiten wie beispielsweise Wasser, Kohlenwasserstoffe, Glyzerin, Öle wie beispielsweise Paraphinöl oder Olivenöl gebildet sein.

Erfindungsgemäß ist nun vorgesehen, dass zum Auftragen von anorganischen Partikeln bzw. von bevorzugt anorganischen Pigmenten unterschiedliche Fluide nämlich ein Partikelfluid 8 bzw. ein Pigmentfluid 9 verwendet wird. Zum Austragen von Fluidtropfen 32 ist der Abgabevorrichtung 5 ein Antrieb 43 zugeordnet, der über eine Steuerleitung 44 mit der Steuereinrichtung 16 verbunden sein kann.

Gleichermaßen sind auch die weiteren Abgabevorrichtungen 22, 23 mit entsprechenden Antrieben 43 die wiederum über Steuerleitungen 44 mit der Steuereinrichtung 16 verbunden sein können, versehen.

Die Abgabevorrichtung 22 ist zur Abgabe eines Pigmentfluides 10 ausgebildet, welches durch ein Gemisch von bevorzugt anorganischen Pigmenten 45 und einem Fluid 46 gebildet ist. Selbstverständlich ist es beim Einsatz der Applikationsvorrichtung 1 möglich, dass bei einer derartigen Gruppe 13 von Abgabevorrichtungen 5, 22, 23 eine Mehrzahl von Abgabevorrichtungen 22 für Pigmentfluide 10 mit unterschiedlichsten Pigmenten zur Herstellung der unterschiedlichsten Farben nämlich der Grundfarben Cyan, Magenta, Yellow, Black und Weiß bzw. Schwarz bestehen.

In Förderrichtung - Pfeil 6 - ist der oder den Abgabevorrichtungen 22 eine weitere Abgabevorrichtung 23 zur Abgabe eines Partikelfluids 26 nachgeordnet.

Das Partikelfluid 26 besteht dazu aus beispielsweise zu den Partikeln 41 unterschiedlichen Partikeln 47 und dem gleichen oder einem zum Fluid 42 unterschiedlichen Fluid 48.

Weiters ist in dieser Darstellung gezeigt, dass die Abgabevorrichtungen 22 zur Abgabe von Fluidtropfen 32 beispielsweise mit größerem Volumen als die Fluidtropfen 33 und 34 ausgebildet sein kann.

Die Größe dieser Fluidtropfen 32, 33, 34 bzw. deren Volumen ist mitbestimmend für die Menge bzw. das Volumen der auf das Substrat 2 aufgebrachten Partikel 41, 47 bzw. Pigmente 45. Von Vorteil ist es hier, wenn die Fluidtropfen ein Volumen zwischen 20 und 70 bevorzugt von 50 Picoliter aufweisen. Zur Herstellung von Fluidtropfen 32 bis 34, 36, 38 mit dem entsprechenden Volumen ist es nunmehr möglich die Antriebe 43 über die Steuereinrichtung 16 unterschiedlich lang zu beaufschlagen, sodass Fluidtropfen 32 - 34, 36, 38 mit größerem Volumen gebildet werden oder es ist auch möglich, Abgabevorrichtungen mit unterschiedlichen Düsen das heißt Düsen mit unterschiedlichen Bohrungs- bzw Düsendurchmessern zu verwenden. Die Verwendung von Düsen mit unterschiedlichen Querschnitt bzw. unterschiedlichen Bohrungsdurchmessern kann zusätzlich die Möglichkeit eröffnen in den Partikelfluide 8, 26 bzw. Pigmentfluid 10, 27 Partikel 41, 47 bzw. Pigmente 45 mit unterschiedlichen Durchmessern bzw. Korngrößen oder unterschiedlicher Siebkurve dem jeweiligen Fluid 42, 46 oder 48 zuzusetzen.

Derartige Partikel beispielsweise Glasfrittepartikel können einen mittleren Durchmesser von < 5 µm und bevorzugt < 2 µm aufweisen. Die Farbpigmentpartikel können unterschiedliche mittlere Durchmesser von 0,5 bis 4 µm bevorzugt einen Durchmesser oder eine Korngröße von < 1 µm aufweisen.

Hinsichtlich der bei den Partikelfluiden 8, 26 einzusetzenden Partikel 41, 47 bzw Pigmente 45 ist zu berücksichtigen, dass sowohl fabrilläre, das heißt fasrige Partikel 41, 47 bzw Pigmente 45 oder sphärische Partikel 41, 47 verwendet werden können. Bei der Verwendung von fabrillären Partikeln 41, 47 bzw Pigmente 45 bzw. Pulver ist jedoch zu berücksichtigen, dass sie das Fließverhalten der Flüssigkeit bzw des Fluides 42, 46, 48 zu der sie zugegeben werden, gegebenenfalls scherabhängig machen können, das heißt, die Flüssigkeit bzw. das Fluid in Richtung einem nicht-Newtonsen Verhalten verändern. Dies kann zum Beispiel bei der Verwendung für Partikelfluide 8, 26 wie auch bei so genannten Tinten für Druckfarben deren Verwendung erschweren. Sphärische Partike41, 47 bzw Pigmente 45 bzw. das Pulver aus sphärischen Partikeln 41, 47 ist dagegen besser rieselfähig und lässt sich leichter fördern, dosieren und dispergieren. Bei Partikeln 41, 47 bzw Pigmenten 45 mit fabrillärer Struktur ist außerdem zu berücksichtigen, dass sich dort beispielsweise durch Verhacken oder sonstiges verbinden kleinerer fabrillärer Partikel bzw Pigmente 45 auch größere fabrilläre Partikel bzw Pigmente 45 bilden können. Vorteilhaft ist, wenn die sphärischen Partikel 41, 47 bzw Pigmente 45 eine unregelmäßige Oberfläche aber keine fasrigen Ausfransungen oder Fibrillen aufweisen. Zudem kommt, dass die Schüttdichte von sphärischen Partikeln 41, 47 bzw Pigmente 45 bzw. das Pulver aus derartigen Partikeln zum Beispiel verfahrenstechnische Vorteile verschaffen kann, da derartige Partikel 41, 47 bzw Pigmente 45 bzw. das Pulver eine höhere Kompaktheit und unter anderem eine bessere Rieselfähigkeit, Einmischbarkeit in verschiedene Medien und eine problemlosere Lagefahigkeit ermöglicht.

Der Durchmesser der Düsen kann sich aber auch nicht oder nicht ausschließlich an der Korngröße bzw. den Durchmessern der Partikel 41, 47 bzw. Pigmente 45 orientieren, sondern kann in Abhängigkeit von den verwendeten Fluiden 42, 46, 48 ausschließlich oder zumindest mitbestimmt werden.

Dazu sind vor allem die dynamische und die kinematische Viskosität der verschiedenen Fluide 8, 10, 26, 27 bzw. deren spezifisches Gewicht ebenfalls mit zu berücksichtigen oder ausschließlich zu berücksichtigen.

Um nun die erfindungsgemäßen Vorteile zu erzielen die durch die Trennung der Fluide in ein Partikelfluid 8, 26 bzw. ein Pigmentfluid 10, 27 geschaffen werden können, ist die Zähigkeit und das spezifische Gewicht sowie die dynamische Viskosität bzw. die Zähigkeit und die kinematische Viskosität der Fluide 42, 46, 48 und das spezifische Gewicht der Partikel 41, 47 bzw. der Pigmente 45 aufeinander abzustimmen. Nachdem üblicherweise das spezifische Gewicht der für das Partikelfluid 8, 26 benötigten Partikel 41, 47 stark unterschiedlich zum spezifischen Gewicht der Pigmente 45 wie sie für das Pigmentfluid 10, 27 benötigt werden ist, schafft die vorliegende Erfindung durch die Trennung der beiden Fluide die Möglichkeit, die kinematische Viskosität und Zähigkeit so auf das spezifische Gewicht der Partikel 41, 47 bzw. der Pigmente 45 abzustellen, dass das spezifische Gewicht bzw. die Wichte des Fluides 42, 48; 46 bzw. der Partikel 41, 47; 45 annähernd gleich ist.

Es ist aber auch möglich, dass die Differenz zwischen dem spezifischen Gewicht oder der Wichte zwischen den Fluiden 42, 48; 46 und den Partikeln 41, 47 bzw. Pigmenten 46 im Bereich von +/- 20 % bevorzugt +/- 5 % bis 10 % liegt.

Wenn das spezifische Gewicht bzw. die Wichte des Fluides 42, 48; 46 und der Partikel 41, 47 bzw. Pigmente 46 annähernd gleich sind man üblicherweise davon ausgehen kann, dass eine hergestellte verteilte Einmischung der Partikel 41, 47 bzw. Pigmente 46 in das Fluid 42, 46, 48 über einen gewissen Zeitraum sich rein theoretisch nicht verändert oder einen annähernd stabilen Zustand einnimmt. Dadurch kann eine Sedimentation oder Agglomeration bzw. ein Absinken oder Ausscheiden der Partikel 41, 47 bzw. Pigmente 45 zur Gänze verhindert oder zumindest soweit reduziert werden, dass im Zuge der üblichen Bewegung der Fluide während der Verarbeitung durch Umpumpen zwischen den verschiedenen Tanks und den Abgabevorrichtungen 5, 12, 22 bis 25 etwa eine Gleichverteilung der Partikel 41, 47 bzw. Pigmente 25 in den Fluiden 42, 46, 48 erreicht und zumindest über eine für die Verarbeitung benötigte Zeitspanne aufrecht erhalten werden kann.

Dann, wenn eine kontinuierliche Durchmischung oder Bewegung der Fluide 42, 46, 48 durch Rührwerke oder laufendes Umpumpen sicher gestellt werden kann, ist es auch möglich, eine Differenz zwischen den spezifischen Gewichten der Fluide 42, 48; 46 und der Partikel 41, 47 bzw. Pigmenten 45 in einem Bereich von +/- 20 % bevorzugt in einem Bereich von +/- 5 % bis 10 % zu verwenden.

Nachdem aber bei Fluiden insbesondere bei Flüssigkeiten auch die Zähflüssigkeit für das Absinken bzw. Aufsteigen oder Entmischen von Partikeln 41, 47 bzw. Pigmenten 45 also die so genannte Viskosität mit ein zu beziehen ist, ist nach der erfindungsgemäßen Lösung mit Vorteil vorgesehen, dass die Viskosität und das spezifische Gewicht des Fluides 42, 48; 46 so in einem Verhältnis zum spezifischen Gewicht der Partikel 41, 47 oder Pigmente 45 gesetzt wird, dass die Relativgeschwindigkeit zwischen den Partikeln 41, 47 oder Pigmenten 45 und dem Fluid 42, 48; 46 annähernd Null ist. Dieses Verhältnis zwischen der Viskosität und dem spezifischen Gewicht also zwischen der dynamischen Viskosität und dem spezifischen Gewicht wird üblicherweise auch als kinematische Viskosität bezeichnet. Nachdem die unterschiedlichen Fluide bzw. vor allem flüssigen Fluide äußerst unterschiedliche Viskositätwerte der dynamischen Viskosität aufweisen, die sich größenordnungsmäßig im Verhältnis von 1,0 mPas bei Wasser bei 20°C zu 102 bis 106 mPas bei Paraphinöl bzw. von 1.480 mPas bei Glyzerin bewegen kann, kann der auf diesem Gebiet tätige Fachmann aus den vorhandenen Fluiden unter Zusetzung von entsprechenden Verdünnungsmittel bzw. Mischung unterschiedlicher flüssigen Fluide ein Fluid herstellen, dessen kinematische Viskosität bzw. Viskosität im Verhältnis zum spezifischen Gewicht der Partikel 41, 47 bzw. der Pigmente 45 derart ausgelegt ist, dass die durch Mischen gleichmäßig in einer bestimmten Menge des Fluides verteilten Partikel 41, 47 bzw. Pigmente 45 möglichst lange in dem im Fluid gleichmäßig verteilten Zustand verbleiben. Dies hat den Vorteil, dass viele Partikel 41, 47 bzw Pigmente 45 überhaupt erst ohne aufwändige zusätzliche Umpump- und Behandlungsverfahren wie Ultraschall oder dergleichen zum Beibehalten einer homogenen Mischung zwischen den Fluiden 42, 46, 48 und den Partikeln 41, 47 bzw Pigmenten 45 erreicht werden kann.

Gleiches gilt für die Pigmente 45 in den Fluiden 46.

Im Rahmen der Erfindung ist es vor allem vorteilhaft, wenn darauf geachtet wird, dass die kinematische Viskosität des Fluides so in das Verhältnis zum spezifischen Gewicht der Partikel 41, 47 oder Pigmente 45 gesetzt wird, dass eine Sinkgeschwindigkeit der Partikel 41, 47 oder Pigmente 45 in den Fluiden 42, 48, 46 zwischen 0,1 % und 30 % bevorzugt 0,1 % bis 10 % der Erdbeschleunigung liegt. Gleiches gilt für die Auftriebsgeschwindigkeit der Partikel 41, 47 oder Pigmente 45 in den Fluiden 42, 48; 46.

Von Vorteil ist es weiters, wenn ein Pigmentlfuid 10, 27 eine Viskosität von weniger als 15 mPaS aufweist.

Vor allem ist diese Festlegung der kinematischen Viskosität der Fluide 42, 46, 48 von Vorteil, wenn als Partikel 41, 47 ein Flussmittel beispielsweise Partikel aus Glas oder Keramik bzw. Grundstoffen zur Herstellung von Glas und Keramik oder aus Glasfritten verwendet werden. Gleiches gilt auch bei der Verwendung von Kunststoffen oder metallischen oder nicht metallischen Materialien.

Bei den Partikeln 41, 47 bzw. Glasfrittepartikeln ist von Vorteil wenn wenigstens 50 % einen mittleren Durchmesser von kleiner 5 µm bevorzugt kleiner 2 µm aufweisen. Dadurch ist es möglich, mit flüssigen Fluiden das Auslangen zu finden, deren Viskositätswerte noch eine einfache Behandlung der Partikelfluide 8, 26 bzw. Pigmentfluide 10, 27 beispielsweise beim Umpumpen bzw. Durchpumpen durch die Abgabevorrichtungen 5, 12, 22 bis 25 ermöglicht. Bei der Festlegung der kinematischen Viskosität der flüssigen Fluide ist darauf zu achten, dass die Viskosität nicht zu hoch wird, da ansonsten ein Ausstoß der Fluidtropfen 32 bis 34, 36 und 38 nicht mehr gewährleistet ist, bzw. bei den dünnen Düsenbohrungen der Abgabevorrichtungen 5, 12, 22 bis 25 nicht mehr gewährleistet werden kann bzw. unter Umständen zu hohe Temperaturen für die Verarbeitung der Partikelfluide 8, 26 bzw. Pigmentfluide 10, 27 benötigt werden, da wie bekannt die Viskosität von Fluiden bei steigenden Temperaturen sinkt.

Generell ist noch festzuhalten, dass die Viskosität, sich unabhängig davon, ob es sich um die dynamische oder kinematische Viskosität handelt, mit der Temperatur des Fluides 42, 46, 48 verändert. Dementsprechend ist bei der Auslegung der Partikelfluide 8, 26 bzw. Pigmentfluide 10, 27 die jeweils benötigte bzw. zur erwartende Betriebstemperatur der Applikationsvorrichtung 1 bzw. der Abgabevorrichtungen zu berücksichtigen bzw. die Temperatur an die gewünschten Werte für die benötigte Viskosität des Fluides 8, 10, 26,27 anzupassen.

Bei der Verarbeitung der Pigmente 45 des Pigmentfluides 10, 27 ist es von Vorteil anorganische Farbpigmente zu verwenden, da anorganische Farbpigmente auch höhere Verarbeitungstemperaturen ermöglichen und vor allem dann, wenn Partikel 41, 47 durch sintern, aufschmelzen oder durch eine sonstige Wärmebehandlung mit den darunter liegenden Lagen an Pigmentfluiden 10, 27, bzw. Partikelfluiden 8, 26 oder dem Substrat 2 zu verbinden sind, die anorganischen Pigmente ihre Farbkraft beibehalten.

Selbstverständlich ist es aber auch bei Verarbeitung von Partikelfluiden 8, 26 die keine Verarbeitungstemperaturen zum Verbinden mit den Fluidtropfen der anderen Lagen bzw. dem Substrat 2 erfordern auch organische Pigmente zu verwenden.

Bei den Pigmenten 45 ist es von Vorteil, wenn zwischen 80 und 95 % bevorzugt wenigstens 90 Gew% der Pigmente 45 einen mittleren Durchmesser von 0,5 µm bis 4 µm bevorzugt kleiner als 1 µm aufweisen.

Die Ausführungsbeispiele zeigen mögliche Ausführungsvarianten der Anordnung der Fluidtropfen bzw. Fluidpunkte sowie der Abgabevorrichtung und der daraus gebildeten Gruppen 13, 21, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Einer weiteren und gegebenenfalls für sich eigenständige Ausführungsform, wobei wiederum für gleiche Teile gleiche Bezugszeichen bzw. Bauteilbezeichnungen wie in den vorangegangenen Fig. 2 bis 7 verwendet werden. Um unnötige Wiederholungen zu vermeiden, wird auf die detaillierte Beschreibung in den vorangegangenen Fig. 2 bis 7 hingewiesen bzw. Bezug genommen.

Der Ordnung halber sei abschließend darauf hingewiesen, dass zum besseren Verständnis der Aufbau der Vorrichtung bzw. deren Bestandteile sowie die Tintenpunkte bzw. -tropfen teilweise unmaßstäblich und/oder vergrößert und/oder verkleinert dargestellt wurden.

Vor allem können die einzelnen in den Fig. 2; 3; 4; 5; 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Applikationsvorrichtung
- 2: Substrat
- 3: Fluid
- 4: Düse
- 5: Abgabevorrichtung

- 6: Pfeil
- 7: Düse
- 8: Partikelfluid
- 9: Düse
- 10: Pigmentfluid

- 11: Vorrichtung zur Energiezu- fuhr/Trockenvorrichtung
- 12: Abgabevorrichtung
- 13: Gruppe
- 14: Positioniereinrichtung
- 15: Antriebsvorrichtung

- 16: Steuereinrichtung
- 17: Sensor
- 18: Aufnahmebehälter
- 19: Aufnahmebehälter
- 20: Zufuhrleitung

- 21: Gruppe
- 22: Abgabevorrichtung
- 23: Abgabevorrichtung
- 24: Abgabevorrichtung
- 25: Abgabevorrichtung

- 26: Partikel
- 27: Pigmentfluid
- 28: Rollenbahn
- 29: Lage
- 30: Breite

- 31: Reihe
- 32: Fluidtropfen
- 33: Fluidtropfen
- 34: Fluidtropfen
- 35: Lage

- 36: Fluidtropfen
- 37: Lage
- 38: Fluidtropfen
- 39: Freiraum
- 40: Reihe

- 41: Partikel
- 42: Fluid
- 43: Antrieb
- 44: Steuerleitung
- 45: Pigment

- 46: Fluid
- 47: Partikel
- 48: Fluid

## Patentansprüche

1. Verfahren zum Herstellen einer Glasur auf zumindest einem Teil eines bevorzugt glasigen und/oder keramischen Substrates (2) aus Pigmenten (45) und Partikeln (41, 47) aus einem Flussmittel (42, 48) oder Glas oder Keramik bzw. den Grundstoff zur Herstellung von Glas oder Keramik oder aus Glasfritte mittels Tintenstrahldruck durch Auftrag von Fluiden (42, 46) mit einer durch eine Steuervorrichtung (16) gesteuerten Applikationsvorrichtung (1) mit jeweils separaten Abgabevorrichtungen (5, 12, 22-25), denen Aufnahmebehälter (18, 19) zur Aufnahme des Partikelfluides (8, 26) und des Pigmentfluides (10, 27) zugeordnet sind, wobei das Partikelfluid (8, 26) und das Pigmentfluid (10, 27) in vorher koordinierbarer zeitlicher und räumlicher Abstimmung getrennt auf das zu beschichtende Substrat (2) aufgebracht werden, wobei zuerst eine oder mehrere Pigmentfluide (10) aufgebracht und auf und/oder zwischen diesen zumindest in einzelnen Teilbereichen das Partikelfluid (8) aufgebracht wird und danach zur Glasur gebrannt werden, **dadurch gekennzeichnet, dass** das oder die Pigment(e) (45) mit den Partikeln (41, 47) nach dem Auftragen auf das Substrat (2) und vor dem Brennen auf dem Substrat (2) gemischt werden.

2. Verfahren nach Anspruch 1, **dadurch gekennzeichnet, dass** das Partikelfluid (8, 26) und das Pigmentfluid (10, 27) gleichzeitig an unterschiedlichen Positionen des zu beschichtenden Teils der Oberfläche des Substrates (2) aufgebracht werden.

3. Verfahren nach einem der Ansprüche 1 oder 2, **dadurch gekennzeichnet, dass** die Fluidtropfen (32-34, 36, 38) des Partikelfluids (8, 26) und zumindest eines Pigmentfluids (10, 27) zumindest teilweise überlappend übereinander aufgebracht werden.

4. Verfahren nach einem der Ansprüche 1 bis 3, **dadurch gekennzeichnet, dass** Fluidtropfen (33, 36, 38) von mehreren Pigmentfluiden (10, 27) zumindest teilweise überlappend übereinander aufgebracht werden.

5. Verfahren nach einem der Ansprüche 1 bis 4, **dadurch gekennzeichnet, dass** die Fluidtropfen (32, 34) des Partikelfluides (8, 26) auf einen oder mehreren von Fluidtropfen (33, 36, 38) von zumindest eines Pigmentfluides (10, 27) zumindest teilweise überlappend aufgebracht werden.

6. Verfahren nach einem der Ansprüche 1 bis 5, **dadurch gekennzeichnet, dass** zum Aufbringen eines mehrfärbigen Motives jeweils zuerst die Fluidtropfen des Partikelfluides (8, 26) und danach anschließend die Fluidtropfen zumindest eines Pigmentfluides (10, 27) aufgebracht werden.

7. Verfahren nach einem der Ansprüche 1 bis 6, **dadurch gekennzeichnet, dass** zum mehrfärbigen Beschichten des Objekts (2) mit einem Motiv zuerst die Fluidtropfen (33, 36, 38) von zumindest eines Pigmentfluides (10, 27) und darauffolgend die Fluidtropfen (32, 34) des Partikelfluids (8, 26) aufgebracht werden.

8. Verfahren nach einem der Ansprüche 1 bis 7, **dadurch gekennzeichnet, dass** durch das gleichzeitige oder aufeinander folgende Plazieren mehrerer Fluidtropfen (33, 36, 38) aus dem Pigmentfluid (10, 27) nebeneinander ein bunter Bildpunkt des Motives aus mehreren Grundfarben auf die Fluidtropfen (32, 34) des Partikelfluids (8, 26) oder eine Oberfläche des Substrats (2) aufgetragen wird.

9. Verfahren nach einem der Ansprüche 1 bis 8, **dadurch gekennzeichnet, dass** Partikel (41, 47) des Partikelfluides (8, 26) mit einem durch ein Gas gebildeten Fluid auf die Fluidtropfen des Pigmentfluides (10, 27) aufgebracht werden.

10. Verfahren nach einem der Ansprüche 1 bis 9, **dadurch gekennzeichnet, dass** die Viskosität und das spezifische Gewicht des Fluides (42, 48; 46) im Verhältnis zum spezifischen Gewicht der Partikel (41, 47) oder Pigment (45) derart aufeinander abgestimmt werden, dass die Sinkgeschwindigkeit der Partikel (41, 47) oder Pigmente (45) in dem Fluid (42, 48; 46) des Partikel- bzw. Pigmentfluides (8, 26; 10, 27) zwischen 0,1 % und 30 %, bevorzugt 0,1 % und 10 %, der Erdbeschleunigung beträgt.

11. Verfahren nach einem der Ansprüche 1 bis 10, **dadurch gekennzeichnet, dass** das Partikelfluid (8, 26) als Partikel (41,47) ein Flussmittel (42, 48) und als Fluid eine Trägerflüssigkeit aufweist.

12. Verfahren nach Anspruch 11, **dadurch gekennzeichnet, dass** das Fluid (42, 48) des Partikelfluids (8, 26) zusätzlich zur Trägerflüssigkeit ein Dispergierhilfsmittel und ein Verdünnungsmittel enthält.

13. Verfahren nach einem der Ansprüche 1 bis 12, **dadurch gekennzeichnet, dass** wenigstens 50 % der Partikel (41, 47) bzw. der Glasfrittepartikel einen mittleren Durchmesser von kleiner 5 µm bevorzugt kleiner 2 µm aufweisen.

14. Verfahren nach einem der Ansprüche 1 bis 13, **dadurch gekennzeichnet, dass** Fluidtropfen (32, 34) der Abgabevorrichtung (5, 23) für das Partikelfluid (8, 26) mit einem Volumen zwischen 20 Picoliter und 70 Picoliter, bevorzugt 50 Picoliter, ausgestoßen werden.

15. Verfahren nach einem der Ansprüche 1 bis 14, **dadurch gekennzeichnet, dass** Pigmente (45) des Pigmentfluides (10, 27) durch anorganische Farbpigmente gebildet werden.

16. Verfahren nach einem der Ansprüche 1 bis 15, **dadurch gekennzeichnet, dass** wenigstens 90 Gew% der Farbpigmentpartikel einen mittleren Durchmesser von 0,5 bis 4 µm bevorzugt kleiner als 1 µm aufweisen.

17. Verfahren nach einem der Ansprüche 1 bis 16, **dadurch gekennzeichnet, dass** auf das Substrat (2) eine weitere Lage (35) an Fluidtropfen (36) aus des Pigmentfluids (10), die mit der Abgabevorrichtung (24) aufgebracht wird und eine weitere Lage (37) aus Fluidtropfen (38) von Pigmentfluid (27) mit der Abgabevorrichtung (25) partiell oder über die gesamte Breite (30) durchgehend in mehr oder weniger dichter Nebeneinanderanordnung oder einander unmittelbar berührend bzw. zumindest teilweise überlappend angeordnet aufgetragen wird.

18. Verfahren nach Anspruch 17, **dadurch gekennzeichnet, dass** an verschiedenen Stellen des Substrates (2) unterschiedliche Lagen (29, 35, 37) aus Partikelfluid (8, 26) und/oder Pigmentfluiden (10, 27) aufgebracht werden, um unterschiedliche physikalische Zusammensetzungen zu erreichen.

## Claims

1. A method for producing a glazing on at least one portion of a preferably glass and/or ceramic substrate (2) of pigments (45) and particles (41, 47) from a flux (42, 48) or glass or ceramic and the base material for producing glass or ceramic or from glass frit using inkjet printing by applying fluids (42, 46) with an application device (1) that is controlled by a control device (16), each having separate dispensing devices (5, 12, 22-25) to which holding containers (18, 19) for holding the particle fluid (8, 26) and the pigment fluid (10, 27) are assigned, wherein the particle fluid (8, 26) and the pigment fluid (10, 27) are applied in a previously coordinated manner separately in terms of time and spatial coordination onto the substrate (2) to be coated, wherein initially one or more pigment fluids (10) are applied, and the particle fluid (8) is applied onto and/or between said pigment fluids at least in individual partial areas and are then burned to form the glazing, **characterised in that** the one or more pigment(s) (45) is/are mixed with the particles (41, 47) after the application onto the substrate (2) and before the burning onto the substrate (2).

2. The method according to claim 1, **characterised in that** the particle fluid (8, 26) and the pigment fluid (10, 27) are applied simultaneously to different positions of the part of the surface of the substrate (2) that is to be coated.

3. The method according to either of claims 1 or 2, **characterised in that** the fluid drops (32-34, 36, 38) of the particle fluid (8, 26) and at least one pigment fluid (10, 27) are applied to overlap one another at least partly.

4. The method according to one of claims 1 to 3, **characterised in that** fluid drops (33, 36, 38) of multiple pigment fluids (10, 27) are applied to overlap one another at least partly.

5. The method according to one of claims 1 to 4, **characterised in that** the fluid drops (32, 34) of the particle fluid (8, 26) are applied to one or more of the fluid drops (33, 36, 38) of at least one pigment fluid (10, 27) to overlap them at least partly.

6. The method according to one of claims 1 to 5, **characterised in that** in order to apply a multicoloured pattern, each time first the fluid drops of the particle fluid (8, 26) and subsequently the fluid drops of at least one pigment fluid (10, 27) are applied.

7. The method according to one of claims 1 to 6, **characterised in that** in order to provide the object (2) with a multicoloured coating with a pattern, first the fluid drops (33, 36, 38) of at least one pigment fluid (10, 27) and subsequently the fluid drops (32, 34) of the particle fluid (8, 26) are applied.

8. The method according to one of claims 1 to 7, **characterised in that** due to the simultaneous or consecutive placement of multiple fluid drops (33, 36, 38) from the pigment fluid (10, 27) side by side a multicoloured image point of the pattern consisting of multiple base colours is applied to the fluid drops (32, 34) of the particle fluid (8, 26) or a surface of the substrate (2).

9. The method according to one of claims 1 to 8, **characterised in that** particles (41, 47) of the particle fluid (8, 26) are applied to the fluid drops of the pigment fluid (10, 27) with a fluid that is formed by a gas.

10. The method according to one of claims 1 to 9, **characterised in that** the viscosity and specific weight of the fluid (42, 48; 46) relative to the specific weight of the particles (41, 47) or pigment (45) are coordinated with one another such that the sinking speed of the particles (41, 47) or pigments (45) in the fluid (42, 48; 46) of the particle and pigment fluid (8, 26; 10, 27) is between 0.1% and 30%, preferably between 0.1% and 10% of gravitational acceleration.

11. The method according to one of claims 1 to 10, **characterised in that** the particle fluid (8, 26) comprises a fluxing agent (42, 48) as particles (41, 47) and a carrier fluid as a fluid.

12. The method according to claim 11, **characterised in that** the fluid (42, 48) of the particle fluid (8, 26) in addition to the carrier fluid contains a dispersing agent and a thinning agent.

13. The method according to one of claims 1 to 12, **characterised in that** at least 50% of the particles (41, 47) or glass frit particles have an average diameter smaller than 5 µm, preferably smaller than 2 µm.

14. The method according to one of claims 1 to 13, **characterised in that** fluid drops (32, 34) of the dispensing device (5, 23) for the particle fluid (8, 26) are ejected in a volume of between 20 picolitres and 70 picolitres, preferably 50 picolitres.

15. The method according to one of claims 1 to 14, **characterised in that** pigments (45) of the pigment fluid (10, 27) are formed by inorganic colour pigments.

16. The method according to one of claims 1 to 15, **characterised in that** at least 90 wt.% of the colour pigment particles have an average diameter of 0.5 to 4 µm, preferably less than 1 µm.

17. The method according to one of claims 1 to 16, **characterised in that** a further layer (35) of fluid drops (36) from the pigment fluid (10), which is applied by means of the dispensing device (24), and a further layer (37) of fluid drops (38) from pigment fluid (27) are applied by means of the dispensing device (25) over part of or the entire width (30) in an uninterrupted coat in more or less dense side by side arrangement, or touching each other directly, or overlapping each other at least partly on the substrate (2).

18. The method according to claim 17, **characterised in that** different layers (29, 35, 37) of particle fluid (8, 26) and/or pigment fluids (10, 27) are applied to different sites on the substrate (2), in order to achieve different physical compositions.

## Revendications

1. Procédé de réalisation d'une glaçure sur au moins une partie d'un substrat (2) de préférence vitreux et/ou céramique à partir de pigments (45) et de particules (41, 47) d'un flux décapant (42, 48) ou de verre ou de céramique ou du matériau de base pour la fabrication de verre ou de céramique ou à partir de fritte de verre au moyen d'une impression à jet d'encre par l'application de fluides (42, 46) avec un dispositif d'application (1) commandé par un dispositif de commande (16) comprenant des dispositifs de délivrance séparés respectifs (5, 12, 22-25) auxquels sont adjoints des conteneurs de réception (18, 19) destinés à recevoir le fluide chargé de particules (8, 26) et le fluide chargé de pigments (10, 27), étant entendu que le fluide chargé de particules (8, 26) et le fluide chargé de pigments (10, 27) sont appliqués séparément sur le substrat (2) à revêtir d'une manière harmonisée dans le temps et dans l'espace pouvant être coordonnée au préalable, étant entendu qu'en premier lieu, un ou plusieurs fluides chargés de pigments (10) sont appliqués et le fluide chargé de particules (8) est appliqué sur et/ou entre ceux-ci au moins dans des zones partielles individuelles, puis ils sont cuits pour former la glaçure, **caractérisé en ce que** le ou les pigments (45) sont mélangés avec les particules (41, 47) après l'application sur le substrat (2) et avant la cuisson sur le substrat (2).

2. Procédé selon la revendication 1, **caractérisé en ce que** le fluide chargé de particules (8, 26) et le fluide chargé de pigments (10, 27) sont appliqués en même temps à des endroits différents de la partie à revêtir de la surface du substrat (2).

3. Procédé selon l'une des revendications 1 ou 2, **caractérisé en ce que** les gouttes de fluide (32-34, 36, 38) du fluide chargé de particules (8, 26) et d'au moins un fluide chargé de pigments (10, 27) sont appliquées au moins partiellement en chevauchement les unes sur les autres.

4. Procédé selon l'une des revendications 1 à 3, **caractérisé en ce que** les gouttes de fluide (33, 36, 38) de plusieurs fluides chargés de pigments (10, 27) sont appliquées au moins partiellement en chevauchement les unes sur les autres.

5. Procédé selon l'une des revendications 1 à 4, **caractérisé en ce que** les gouttes de fluide (32, 34) du fluide chargé de particules (8, 26) sont appliquées au moins partiellement en chevauchement sur une ou plusieurs des gouttes de fluide (33, 36, 38) d'au moins un fluide chargé de pigments (10, 27).

6. Procédé selon l'une des revendications 1 à 5, **caractérisé en ce que** pour l'application d'un motif multicolore, respectivement, les gouttes de fluide du fluide chargé de particules (8, 26) sont appliquées en premier lieu, puis les gouttes de fluide d'au moins un fluide chargé de pigments (10, 27).

7. Procédé selon l'une des revendications 1 à 6, **caractérisé en ce que** pour le revêtement multicolore de l'objet (2) avec un motif, les gouttes de fluide (33, 36, 38) d'au moins un fluide chargé de pigments (10, 27) sont appliquées en premier lieu, et ensuite les gouttes de fluide (32, 34) du fluide chargé de particules (8, 26).

8. Procédé selon l'une des revendications 1 à 7, **caractérisé en ce que** par le dépôt simultané ou successif de plusieurs gouttes de fluide (33, 36, 38) à partir du fluide chargé de pigments (10, 27) les unes à côté des autres, un point d'image coloré du motif est appliqué à partir de plusieurs couleurs de base sur les gouttes de fluide (32, 34) du fluide chargé de particules (8, 26) ou sur une surface du substrat (2).

9. Procédé selon l'une des revendications 1 à 8, **caractérisé en ce que** des particules (41, 47) du fluide chargé de particules (8, 26) sont appliquées sur les gouttes de fluide du fluide chargé de pigments (10, 27) avec un fluide formé par un gaz.

10. Procédé selon l'une des revendications 1 à 9, **caractérisé en ce que** la viscosité et le poids spécifique du fluide (42, 48 ; 46) sont coordonnés par rapport au poids spécifique des particules (41, 47) ou des pigments (45) de telle sorte que la vitesse de sédimentation des particules (41, 47) ou des pigments (45) dans le fluide (42, 48 ; 46), respectivement, des fluides chargés de particules et de pigments (8, 26 ; 10, 27) est comprise entre 0,1 % et 30 %, et de préférence entre 0,1 % et 10 %, de l'accélération de la pesanteur.

11. Procédé selon l'une des revendications 1 à 10, **caractérisé en ce que** le fluide chargé de particules (8, 26) présente, comme particules (41, 47), un flux décapant (42, 48), et comme fluide, un liquide porteur.

12. Procédé selon la revendication 11, **caractérisé en ce que** le fluide (42, 48) du fluide chargé de particules (8, 26) contient, en plus du liquide porteur, un agent dispersant et un diluant.

13. Procédé selon l'une des revendications 1 à 12, **caractérisé en ce qu'**au moins 50 % des particules (41, 47) ou des particules de fritte de verre présentent un diamètre moyen inférieur à 5 µm, et de préférence inférieur à 2 µm.

14. Procédé selon l'une des revendications 1 à 13, **caractérisé en ce que** des gouttes de fluide (32, 34) sont éjectées du dispositif de délivrance (5, 23) pour le fluide chargé de particules (8, 26) à un volume compris entre 20 picolitres et 70 picolitres, et de préférence de 50 picolitres.

15. Procédé selon l'une des revendications 1 à 14, **caractérisé en ce que** des pigments (45) du fluide chargé de pigments (10, 27) sont constitués par des pigments de couleur anorganiques.

16. Procédé selon l'une des revendications 1 à 15, **caractérisé en ce qu'**au moins 90 % en poids des particules de pigments de couleur présentent un diamètre moyen de 0,5 à 4 µm, et de préférence inférieur à 1 µm.

17. Procédé selon l'une des revendications 1 à 16, **caractérisé en ce qu'**une couche supplémentaire (35) de gouttes de fluide (36) provenant du fluide chargé de pigments (10) est appliquée avec le dispositif de délivrance (24) et une couche supplémentaire (37) de gouttes de fluide (38) du fluide chargé de pigments (27) est appliquée avec le dispositif de délivrance (25) partiellement ou sur toute la largeur (30) en continu sur le substrat (2) de façon agencée dans une juxtaposition plus ou moins dense en contact direct ou au moins partiellement en chevauchement.

18. Procédé selon la revendication 17, **caractérisé en ce qu'**à divers endroits du substrat (2), des couches (29, 35, 37) différentes de fluide chargé de particules (8, 26) et/ou de fluides chargés de pigments (10, 27) sont appliquées afin de parvenir à des compositions physiques différentes.
